# FASCICULE DE BREVET EUROPEEN

(11) **EP 1 483 122 B1**
(45) Date de publication et mention de la délivrance du brevet: **04.04.2007**
(21) Numéro de dépôt: 03708171.8
(22) Date de dépôt: 04.03.2003
(51) Int. Cl.: B60C 9/20, B60C 15/06

(54) **ARMATURE DE SOMMET AVEC NAPPE D'EPAULE**
VERSTÄRKUNGSGÜRTEL MIT SCHULTERSTREIFEN
CROWN REINFORCEMENT WITH SHOULDER PLY

(30) Priorité: 04.03.2002 FR 0202736
(43) Date de publication de la demande: 08.12.2004
(73) Titulaire: Société de Technologie Michelin, 63000 Clermont-Ferrand (FR); MICHELIN Recherche et Technique S.A., 1763 Granges-Paccot (CH)
(72) Inventeur: FERLIN, Olivier, F-63200 Marzat (FR)
(74) Mandataire: Le Cam, Stéphane Georges Elie
(86) Numéro de dépôt international: PCT/EP2003/002179
(87) Numéro de publication internationale: WO 2003/074297

(56) Documents cités:
- EP-A- 0 038 019
- EP-A- 0 845 373
- FR-A- 2 066 777
- US-A- 3 506 052
- US-A- 4 696 335
- PATENT ABSTRACTS OF JAPAN vol. 1998, no. 10, 31 août 1998 (1998-08-31) & JP 10 138708 A (BRIDGESTONE CORP), 26 mai 1998 (1998-05-26)

## Description

L'invention concerne un pneumatique destiné à équiper un véhicule portant une lourde charge, tel que camion, engin de Génie Civil et/ou avion, pneumatique comprenant une armature de carcasse surmontée radialement d'une armature de sommet et d'une bande de roulement.

De tels pneumatiques sont soumis à des sollicitations et déformations répétées qui conduisent à des contraintes dans le pneumatique reprises par les différents renforts et notamment par des nappes de travail de l'armature de sommet. Ces nappes de travail comportent habituellement des renforts positionnés parallèlement entre eux dans une même nappe et posés avec un angle de sorte qu'ils se croisent avec ceux de la nappe de travail adjacente.

Les nappes de travail ont notamment pour fonction de conférer une rigidité au pneumatique. Ces nappes présentent de manière connue à leurs extrémités des zones de fragilité du fait des extrémités libres des éléments de renforcement.

Il est connu pour éviter un contact entre les extrémités des fils des différentes nappes de mettre en place une épaisseur de mélange caoutchouteux qui permet d'espacer et de découpler lesdites extrémités libres des éléments de renforcement d'une nappe de ceux de la nappe adjacente. De la même façon, il est usuel de disposer une épaisseur de mélange caoutchouteux entre la nappe carcasse et l'extrémité de la nappe de travail directement positionnée radialement au-dessus de celle-ci pour espacer les extrémités libres des éléments de renforcement de la nappe de travail de ceux de la nappe carcasse. Ces masses caoutchouteuses permettent notamment d'éviter des ruptures dans les mélanges ou clivage pour un niveau de sollicitations donné.

Il apparaît toutefois que lors de l'utilisation du pneumatique et donc suite à des déformations répétées des amorces de rupture apparaissent dans le mélange entre les éléments de renforcement d'une même nappe de travail.

Par ailleurs, le fait qu'un tel pneumatique soit constitué majoritairement de mélanges caoutchouteux, et qu'il soit soumis à des contraintes et déformations répétées, entraîne une génération de chaleur qui peut être importante et conduire à une réduction de la durée de vie dudit pneumatique.

Ce phénomène qui conduit à une élévation de température et des risques de dégradation du pneumatique est connu et s'explique simplement ; les sollicitations qui s'exercent sur les mélanges caoutchouteux conduisent à un échauffement généré par l'hystérèse des élastomères contenus dans les mélanges caoutchouteux. Cette chaleur générée au coeur de zones caoutchouteuses ne peut pas être évacuée suffisamment rapidement du fait de la faible conductibilité thermique des polymères.

Dans un pneumatique de type radial, la production de chaleur et les températures de fonctionnement atteintes sont les plus importantes dans les régions avoisinant les extrémités des nappes de renforcement constituant principalement d'une part l'armature de carcasse et d'autre part l'armature de sommet. Les dites températures, en combinaison à des niveaux de contraintes importants, influent négativement sur la fatigue des mélanges caoutchouteux des dites régions.

Une diminution des dites températures peut être obtenue par un choix judicieux des mélanges concernés : il est connu que la composition des dits mélanges peut être choisie pour obtenir des pertes hystérétiques les plus faibles possible ; mais il est tout aussi connu que la dite obtention se réalise au détriment d'autres propriétés de même importance qu'une température de fonctionnement peu élevée.

Le brevet US 4,362,200 a également décrit l'utilisation de compositions caoutchouteuses conductrices de la chaleur par incorporation de graphite. Ce choix de composition ne permet pas d'éviter la génération de chaleur mais autorise un refroidissement plus rapide des compositions caoutchouteuses. Toutefois, comme précédemment, ce choix de modification d'une propriété du caoutchouc, d'une part très onéreux, se fait d'autre part au détriment d'autres propriétés également recherchées.

Il est par ailleurs connu notamment du document FR 1 437 569 d'incorporer des nappes comportant des éléments de renforcement dans les épaules des pneumatiques dans les zones environnant les bords de l'armature de sommet. L'incorporation de telles nappes est prévue pour assurer une transition graduelle en termes de rigidité entre l'armature de sommet, relativement rigide, et la carcasse, beaucoup plus souple.

L'invention a pour premier objet de limiter les risques de dégradation des pneumatiques dus à la formation de fissures entre les extrémités des éléments de renforcement des nappes de travail et à la propagation de celles-ci.

Le document FR-A-2 066 777 décrit un pneumatique selon le préambule de la revendication 1. Le pneumatique conforme à l'invention, quant à lui, possède toutes les caractéristiques de la revendication 1.

La direction axiale est définie comme étant la direction de l'axe de rotation.

Le bord d'une nappe est définie comme une zone limitée de la nappe délimitée axialement par une extrémité de ladite nappe.

L'orientation radiale des éléments de renforcement de la nappe additionnelle doit être comprise comme étant une orientation des éléments telle qu'ils présentent un angle avec la direction circonférentielle du pneumatique compris entre 60 et 90°. Selon une réalisation préférée de l'invention limitant au mieux l'apparition de fissures entre les extrémités des éléments de renforcement des nappes de travail, ledit angle est compris 80 et 90°.

Une réalisation avantageuse de l'invention prévoit que les éléments de renforcement de la nappe additionnelle d'épaule sont dits de faible diamètre, comparativement au diamètre compacté D des éléments métalliques des nappes de sommet de travail du pneumatique, lorsque ledit diamètre compacté est inférieur à 0,5 fois le diamètre D.

Avantageusement, le diamètre compacté des éléments de renforcement de la nappe additionnelle est inférieur à 1 mm, et de préférence inférieur à 0.6 mm et de préférence encore inférieur à 0.4 mm.

Le diamètre compacté est le diamètre mesuré d'un élément de renforcement lorsque les fils le constituant sont au contact les uns des autres.

Ces diamètres des éléments de renforcement de la nappe additionnelle autorisent la présence de ladite nappe sans que lesdits éléments de renforcement et plus particulièrement leurs extrémités soient une nouvelle source de risque de dégradation au sein du pneumatique. De tels diamètres permettent notamment de limiter la rigidité de flexion des éléments de renforcement, plus particulièrement dans le cas d'éléments de renforcement métalliques. Il est ainsi possible de limiter les gradients de rigidité, notamment au niveau du bord axialement extérieur de la nappe additionnelle, et ainsi de diminuer les risques de décollement de la nappe additionnelle.

De préférence, le bord axialement extérieur de la nappe additionnelle est associé à une couche de mélange caoutchouteux cohésif radialement à l'intérieur et/ou à l'extérieur de la nappe additionnelle. Une telle couche de mélange caoutchouteux a une fonction de protection et permet notamment de limiter les gradients de rigidité.

Selon une variante avantageuse de l'invention, le bord axialement extérieur de la nappe additionnelle est distant de la base du bourrelet d'une distance H₁ inférieure à H₀ + 0.8H₀, H₀ étant la distance radiale séparant de la base du bourrelet la ligne de plus grande largeur axiale du pneumatique. Selon cette variante de réalisation de l'invention, il apparaît que la nappe additionnelle qui se prolonge jusqu'au moins la partie radialement supérieure de la zone du flanc, va permettre d'améliorer d'autres propriétés mécaniques du pneumatique.

En effet, il est apparu qu'une telle nappe réalisée selon cette variante de l'invention améliore de façon très sensible la résistance du pneumatique contre des chocs touchant l'épaule.

Selon un mode de réalisation avantageux de l'invention et plus particulièrement dans le cas d'une nappe additionnelle dont le bord axialement extérieur se situe au moins dans la partie radialement supérieure de la zone du flanc et les éléments de renforcement de ladite nappe additionnelle étant métalliques, il apparaît que le pneumatique selon l'invention satisfait à autre besoin énoncé précédemment. En effet, un pneumatique ainsi réalisé permet de limiter les risques de dégradation dus à la génération de chaleur apparaissant du fait de l'hystérèse des élastomères sans nuire par ailleurs aux autres propriétés recherchées des caoutchoucs ou plus directement des pneumatiques.

Les dits éléments de renforcement sont alors, de préférence encore, en acier, l'acier étant reconnu comme très bon conducteur de la chaleur, et permettant d'utiliser un matériau largement exploité dans la fabrication des pneumatiques, donc de moindre coût.

Le pneumatique selon l'invention autorise par la présence des nappes additionnelles placées aux épaules l'évacuation rapide vers la surface extérieure du pneumatique des calories produites pendant le roulage. En effet, le positionnement des nappes additionnelles permet de conduire la chaleur vers les zones de flanc où la masse caoutchouteuse est moins importante et autorise donc une évacuation des calories plus rapides même si la nature du caoutchouc n'est pas plus favorable à une bonne conduction ; la faible épaisseur permet en effet à la chaleur d'être éliminée plus rapidement le chemin à parcourir étant faible du coeur de la masse caoutchouteuse vers la surface extérieure. Le pneumatique selon l'invention permet ainsi de diminuer les températures de fonctionnement qui pourraient conduire à une diminution de la durée de vie des pneumatiques.

Selon un mode de réalisation préférentielle de l'invention, la nappe additionnelle a son bord axialement intérieur adjacent radialement à l'extérieur au bord de la nappe de sommet de travail la plus à l'extérieur.

Selon cette réalisation de l'invention, la nappe additionnelle est avantageusement au contact du mélange caoutchouteux qui permet de découpler les extrémités libres des éléments de renforcement des différentes nappes de travail.

En outre, le bord axialement extérieur de la nappe additionnelle d'épaule est quant à lui avantageusement axialement adjacent au profilé de mélange caoutchouteux dont l'une des ailes assure, comme connu en soi, la jonction entre l'armature de carcasse et les bords des nappes d'armature de sommet radialement les plus à l'intérieur et dont l'autre aile descend dans le flanc.

Selon cette réalisation, la nappe additionnelle permet d'une part de limiter la formation et la propagation des fissures dans les zones des extrémités des éléments de renfort et, d'autre part, d'apporter une protection contre les risques liés aux chocs sur les zones de flanc. En outre, la nappe additionnelle autorise une évacuation de la chaleur générée dans la zone d'épaule.

De la même façon et avec des résultats sensiblement équivalent notamment en termes de protection de l'épaule et d'évacuation de la chaleur, la nappe additionnelle peut selon une autre réalisation avoir son bord axialement intérieur adjacent radialement à l'intérieur au bord de la nappe de sommet de travail la plus à l'intérieur radialement.

Selon une autre réalisation avantageuse de l'invention, notamment lorsque la nappe de sommet de travail radialement extérieure est plus étroite axialement que la nappe radialement supérieure de protection et qu'en conséquence la gomme de découplage sépare le bord de ladite nappe de protection de la nappe de travail radialement intérieure, la nappe additionnelle a son bord axialement intérieur adjacent radialement à l'extérieur au bord de la nappe de protection.

Le pneumatique, conforme à l'invention, peut aussi comprendre au moins une nappe d'éléments métalliques, avantageusement de faible diamètre, dans chaque bourrelet, ladite nappe ayant des éléments faisant avec la direction circonférentielle un angle compris entre 60 et 90° et étant destinée à évacuer les calories produites dans le bourrelet. Le bord radialement intérieur de ladite nappe peut être axialement adjacent à la partie principale de la ou d'une nappe d'armature de carcasse ou adjacent à la partie retournée de la ou d'une desdites nappes de carcasse ou adjacent au bord radialement extérieur de la ou d'une nappe de renforcement de bourrelet usuelle composée d'éléments de renforcement métalliques inclinés à un faible angle par rapport à la direction circonférentielle. Le bord radialement extérieur de ladite nappe de bourrelet peut être situé à une distance H₂ de la base de bourrelet au moins égale à 0.5 H₀, H₀ étant la distance radiale séparant de la base du bourrelet la ligne de plus grande largeur axiale du pneumatique.

Ce mode de réalisation de l'invention qui permet une évacuation des calories produites au niveau des bourrelets du pneumatique doit être compris comme pouvant également être une variante de réalisation de l'invention indépendante de la présence des nappes additionnelles dans les épaules telles que présentées précédemment. La combinaison de l'ensemble de ces nappes est toutefois particulièrement avantageuse puisqu'elle permet une meilleure évacuation de la chaleur générée tant dans les régions avoisinant les extrémités des nappes de renforcement constituant principalement d'une part l'armature de carcasse et d'autre part l'armature de sommet que dans les régions des bourrelets.

Dans le cas d'un pneumatique s'échauffant beaucoup, les deux nappes d'épaule et de bourrelet composées d'éléments de faible diamètre peuvent former une unique nappe allant du bord d'une nappe de l'armature de sommet jusqu'au bourrelet.

D'autres détails et caractéristiques avantageux de l'invention ressortiront ci-après de la description des exemples de réalisation de l'invention en référence aux figures 1 à 3 qui représentent :
- figure 1, une vue méridienne d'un schéma d'un pneumatique selon l'invention,
- figure 2, un schéma de l'empilement des différentes nappes incorporant une nappe additionnelle selon une première réalisation de l'invention correspondant à la figure 1,
- figure 3, un schéma de l'empilement des différentes nappes incorporant une nappe additionnelle selon une seconde réalisation de l'invention.

Les figures ne sont pas représentées à l'échelle pour en simplifier la compréhension.

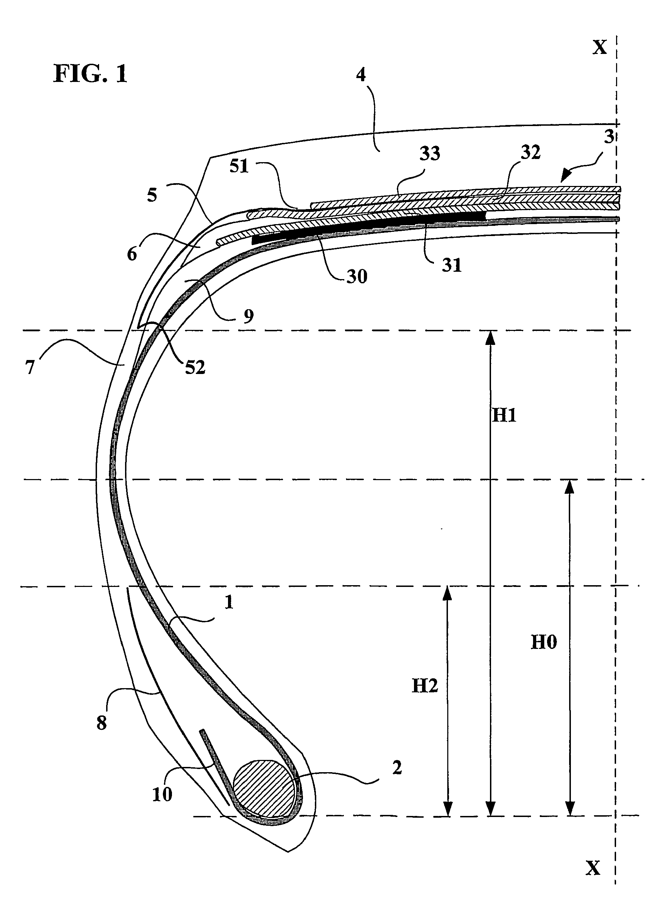

La figure 1 illustre un pneumatique P de dimension 315/80 R 22.5 comprend une armature de carcasse radiale composée d'une seule nappe 1 de câbles métalliques inextensibles, c'est-à-dire des câbles présentant sous une force de traction égale à 10% de la force de rupture un allongement au plus égal à 0,2% ; dans le cas présent il s'agit de câbles métalliques 27x23 (27 fils de 23/100 mm). Ladite armature de carcasse est ancrée dans chaque bourrelet à une tringle 2 pour former un retournement 10. Elle est radialement à l'extérieur surmontée d'une armature de sommet 3, elle-même surmontée d'une bande de roulement 4.

L'armature de sommet comprend radialement de l'intérieur vers l'extérieur :
- deux demi-nappes de sommet 30 dites de triangulation et formées de câbles métalliques 9x28 (9 fils de 28/100), orientés d'un angle α₀, égal dans le cas décrit à 65°,
- surmontant radialement les dites nappes 30, une première nappe de sommet de travail 31, formée de câbles métalliques 11x35 (11 fils de 35/100) faisant avec la direction circonférentielle un angle α₁ égal à 26° et dont le diamètre compacté D est égal à 1.16 mm, les câbles des nappes de triangulation 30 et de la première nappe de travail 31 ayant la même direction,
- puis une deuxième nappe de sommet de travail 32 formée de câbles métalliques identiques à ceux de la première nappe 31, et faisant avec la direction circonférentielle un angle α₂, de sens opposé à l'angle α₁ et, dans le cas montré, égal à 18°,
- une dernière nappe 33 continue axialement, formée de câbles métalliques orientés par rapport à la direction circonférentielle d'un angle α₃ de même sens que l'angle α₂, et égal en valeur absolue audit angle α₂, cette dernière nappe étant une nappe dite de protection, les câbles métalliques E18x23 dits élastiques étant des câbles ayant à la rupture un allongement relatif au moins égal à 4% ; les extrémités des nappes de sommet de travail 31 et 32 sont découplées par une gomme de découplage 6. Cette gomme de découplage 6 permet comme expliqué précédemment de séparer les extrémités des éléments de renforcement de la nappe 31 de celles de la nappe 32.
- de chaque côté du plan équatorial XX', est présente une nappe additionnelle 5 de câbles métalliques 3x18 (3 fils de 18/100), et dont le diamètre compacté est faible et dans le cas décrit égal à 0.35mm. Les dits câbles sont parallèles entre eux dans la nappe et font avec la direction circonférentielle un angle α₄ très largement supérieurs aux angles α₃ et α₂ formés par les câbles respectivement des nappes 32 et 33, puisque égal à 90°.

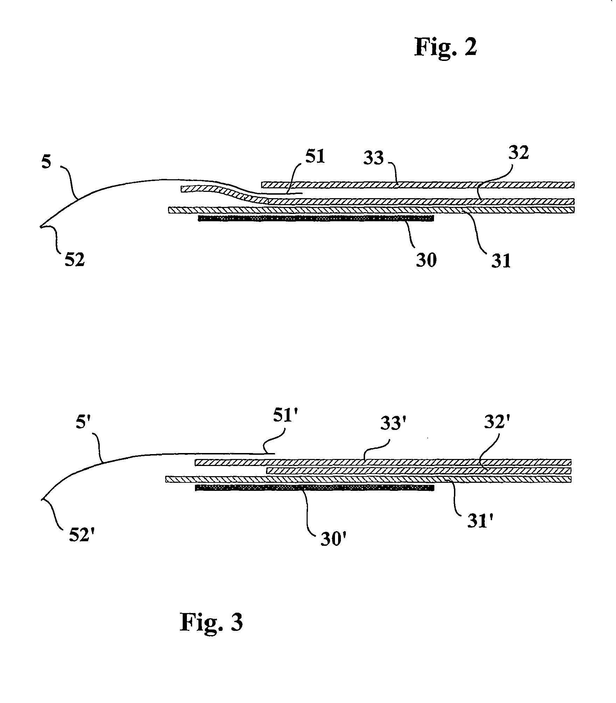

Selon l'exemple de réalisation de l'invention représenté sur les figures 1 et 2, le bord axialement intérieur 51 de la nappe additionnelle d'épaule 5 est, radialement à l'extérieur, adjacent au bord de la deuxième nappe de travail 32 radialement la plus à l'extérieur, et il peut éventuellement être inséré entre la nappe de travail 32 et le bord de la nappe dite de protection 33. Quant au bord radialement inférieur 52 de la dite nappe d'épaule 5, il est axialement disposé sur le profilé 9, ou pied-sommet, assurant la jonction entre nappe de carcasse 1 et bords des nappes de sommet 30 et 31. Dans le cas décrit, l'extrémité radialement inférieure 52 de la nappe 5 est située à une distance H₁ de la base du bourrelet égale à H₀ + 0,5H₀, ce qui conduit ladite extrémité 52 dans la zone du flanc 7.

La figure 1 illustre encore une nappe 8 comportant des éléments de renforcement radiaux de faible diamètre mise en place dans la zone du bourrelet. Cette nappe 8 permet d'évacuer la chaleur qui se forme dans la zone du bourrelet suite aux sollicitations que subissent les masses caoutchouteuses dans cette zone lors du roulage.

La figure 3 illustre un second exemple de réalisation de l'invention dans lequel le pneumatique présente des caractéristiques semblables à celles du pneumatique représenté sur la figure 1 et en diffère en ce que la nappe de travail radialement supérieure 32' est plus étroite que la nappe de protection 33'. La gomme de découplage située à l'épaule est alors intercalée entre la nappe de protection 33' et la nappe de travail 31'. Sur cette figure, le bord axialement intérieur 51' de la nappe additionnelle d'épaule 5' est, radialement à l'extérieur, adjacent au bord de la nappe de protection 33'.

Le pneumatique tel que décrit ci-dessus dans le cas des figures 1 et 2 a été comparé à un pneumatique dit témoin, de même constitution mais sans nappes additionnelles d'épaule.

Deux types d'essais de roulage destructif ont été réalisés :
- le premier essai consiste en un test de roulage sur un volant, selon lequel le pneu subit des mises en dérive.
   Les résultats obtenus selon cet essai ont montré que le pneumatique selon l'invention autorise un kilométrage plus important avant de constater une rupture du pneumatique. Le pneumatique selon l'invention a parcouru 12 500 Km alors que le pneumatique traditionnel a été totalement dégradé après 6 800 Km.
- le deuxième essai est semblable au précédent le pneu ne connaissant aucune mise en dérive mais suivant un parcours en ligne droite. Il apparaît comme dans le test précédent que le pneumatique selon l'invention a parcouru un kilométrage plus important ; 41 000 Km contre 29 000 Km pour le pneu témoin.

Un dernier essai a été réalisé pour mettre en évidence l'apport que peut avoir la nappe additionnelle selon l'invention sur la protection des épaules. Cet essai consiste en un choc trottoir, le pneumatique passant sur une bordure de manière assez violente. De la même façon que dans les essais précédents des pneumatiques selon l'invention sont comparés à des pneumatiques témoins semblables en tout point mais ne possédant pas de nappes additionnelles d'épaule.

Il s'avère que sur cinq essais les pneus témoins ont tous été dégradés avec une rupture de la structure très prononcée.

Concernant les pneus selon l'invention, deux ont été faiblement endommagés en ne présentant que des amorces de rupture.

## Revendications

1. - Pneumatique comprenant une armature de carcasse (1) d'au moins une nappe d'éléments de renforcement ancrée dans chaque bourrelet à au moins un élément annulaire (2) de bourrelet, et une armature de sommet (3) composée d'au moins deux nappes (31, 32) d'éléments de renforcement métalliques, parallèles entre eux dans chaque nappe et croisés d'une nappe à la suivante en faisant avec la direction circonférentielle des angles compris entre 10 et 35°, le pneumatique étant tel qu'il comprend additionnellement au moins dans chaque épaule une nappe (5) d'éléments de renforcement métalliques, et de préférence en acier, parallèles entre eux dans la nappe et orientés radialement, que le bord axialement intérieur (51) de ladite nappe (5) est radialement adjacent à au moins un bord de l'une des nappes (30, 31, 32, 33) de l'armature de sommet (3), que le bord axialement extérieur (52) de ladite nappe (5) est radialement intérieur au bord de la nappe auquel la nappe (5) est adjacente et **caractérisé en ce que** les éléments de renforcement de la nappe additionnelle (5) d'épaule ont un diamètre compacté inférieur à 0,5 fois le diamètre compacté D des éléments métalliques des nappes de sommet de travail (31, 32) du dit pneumatique.

2. - Pneumatique selon la revendication 1, **caractérisé en ce que** les éléments de renforcement de la nappe additionnelle (5) font avec la direction circonférentielle un angle compris entre 60 et 90° et de préférence compris entre 80 et 90°.

3. - Pneumatique selon la revendication 1 ou 2, **caractérisé en ce que** les éléments de renforcement de la nappe additionnelle (5) d'épaule ont un diamètre compacté inférieur à 1 mm et de préférence inférieur à 0.6 mm et de préférence encore inférieur à 0.4 mm.

4. - Pneumatique selon l'une des revendications précédentes, **caractérisé en ce que** le bord axialement extérieur (52) de ladite nappe additionnelle (5) est distant de la base du bourrelet d'une quantité H₁ inférieure à H₀ + 0.8H₀, H₀ étant la distance radiale séparant de la base du bourrelet la ligne de plus grande largeur axiale du pneumatique.

5. - Pneumatique selon l'une des revendications précédentes, **caractérisé en ce que** le bord axialement intérieur (51) de la nappe additionnelle (5) est radialement à l'extérieur et adjacent au bord de la nappe de sommet de travail (32) la plus extérieure radialement.

6. - Pneumatique selon l'une des revendications 1 à 4, comportant une nappe de sommet de protection (33) radialement extérieure aux nappes de sommet de travail, **caractérisé en ce que** le bord axialement intérieur (51) de la nappe additionnelle (5) est radialement à l'extérieur et adjacent au bord de la nappe de sommet de protection (33).

7. - Pneumatique selon l'une des revendications 1 à 4, **caractérisé en ce que** le bord axialement intérieur (51) de la nappe additionnelle (5) est radialement à l'intérieur et adjacent au bord de la nappe de sommet de travail (31) radialement la plus à l'intérieur.

8. - Pneumatique selon l'une des revendications précédentes, **caractérisé en ce qu'**il comprend dans chaque bourrelet au moins une nappe (8) d'éléments de renforcement métalliques, parallèles entre eux dans la nappe et orientés radialement et **en ce que** le bord radialement extérieur de ladite nappe (8) est situé à une distance H₂ de la base de bourrelet au moins égale à 0.5 H₀.

## Claims

1. A tyre comprising a carcass reinforcement (1) of at least one ply of reinforcement elements which is anchored within each bead to at least one annular bead element (2), and a crown reinforcement (3) composed of at least two plies (31, 32) of metallic reinforcement elements, which are parallel to each other within each ply and are crossed from one ply to the next, forming angles of between 10 and 35° with the circumferential direction, the tyre being such that it additionally comprises at least in each shoulder a ply (5) of metallic reinforcement elements, preferably made of steel, which are parallel to each other in the ply and are oriented radially, that the axially inner edge (51) of said ply (5) is radially adjacent to at least one edge of one of the plies (30, 31, 32, 33) of the crown reinforcement (3), that the axially outer edge (52) of said ply (5) is radially internal to the edge of the ply to which the ply (5) is adjacent, and **characterised in that** the reinforcement elements of the additional shoulder ply (5) have a compacted diameter less than 0.5 times the compacted diameter D of the metallic elements of the working crown plies (31, 32) of said tyre.

2. A tyre according to Claim 1, **characterised in that** the reinforcement elements of the additional ply (5) form an angle of between 60 and 90° and preferably of between 80 and 90° with the circumferential direction.

3. A tyre according to Claim 1 or 2, **characterised in that** the reinforcement elements of the additional shoulder ply (5) have a compacted diameter of less than 1 mm and preferably less than 0.6 mm and more preferably still less than 0.4 mm.

4. A tyre according to one of the preceding claims, **characterised in that** the axially outer edge (52) of said additional ply (5) is distant from the base of the bead by a quantity H₁ less than H₀ + 0.8 H₀, H₀ being the radial distance separating the line of greatest axial width of the tyre from the base of the bead.

5. A tyre according to one of the preceding claims, **characterised in that** the axially inner edge (51) of the additional ply (5) is radially to the outside and adjacent to the edge of the radially outermost working crown ply (32).

6. A tyre according to one of Claims 1 to 4, comprising a protective crown ply (33) which is radially external to the working crown plies, **characterised in that** the axially inner edge (51) of the additional ply (5) is radially to the outside and adjacent to the edge of the protective crown ply (33).

7. A tyre according to one of Claims 1 to 4, **characterised in that** the axially inner edge (51) of the additional ply (5) is radially to the inside and adjacent to the edge of the radially innermost working crown ply (31).

8. A tyre according to one of the preceding claims, **characterised in that** it comprises within each bead at least one ply (8) of metallic reinforcement elements which are parallel to each other in the ply and are oriented radially and **in that** the radially outer edge of said ply (8) is located at a distance H₂ from the base of the bead which is at least equal to 0.5 H₀.

## Patentansprüche

1. Luftreifen, der eine Karkassenbewehrung (1) aus mindestens einer Lage von Verstärkungselementen, die in jedem Wulst an mindestens einem ringförmigen Wulstelement (2) verankert ist, und eine Scheitelbewehrung (3) aufweist, die aus mindestens zwei Lagen (31, 32) aus metallischen Verstärkungselementen zusammengesetzt ist, die in jeder Lage parallel zueinander verlaufen und von einer Lage zur folgenden gekreuzt sind, wobei sie mit der Umfangsrichtung Winkel von 10 bis 35° bilden, wobei der Luftreifen zusätzlich zumindest in jeder Schulter eine Lage (5) von metallischen Verstärkungselementen und vorzugsweise Elementen aus Stahl aufweist, die in der Lage parallel zueinander verlaufen und in radialer Richtung orientiert sind, wobei der axial innere Rand (51) der Lage (5) in radialer Richtung an mindestens einen Rand einer Lage (30, 31, 32, 33) der Scheitelbewehrung (3) angrenzt, der axial äußere Rand (52) der Lage (5) bezüglich des Randes der Lage, an die die Lage (5) angrenzt, radial innen liegt, **dadurch gekennzeichnet, dass** die Verstärkungselemente der zusätzlichen Schulterlage (5) einen Kompaktdurchmesser kleiner als das 0,5-fache des Kompaktdurchmessers D der metallischen Elemente der Scheitelfunktionslagen (31, 32) des Luftreifens aufweisen.

2. Luftreifen nach Anspruch 1, **dadurch gekennzeichnet, dass** die Verstärkungselemente der zusätzlichen Lage (5) mit der Umfangsrichtung einen Winkel von 60 bis 90° und vorzugsweise 80 bis 90° bilden.

3. Luftreifen nach Anspruch 1 oder 2, **dadurch gekennzeichnet, dass** die Verstärkungselemente der zusätzlichen Schulterlage (8) einen Kontaktdurchmesser unter 1 mm, vorzugsweise unter 0,6 mm und noch bevorzugter unter 0,4 mm aufweisen.

4. Luftreifen nach einem der vorhergehenden Ansprüche, **dadurch gekennzeichnet, dass** der axial äußere Rand (52) der zusätzlichen Lage (5) in einem Abstand H₁ von der Basis des Wulstes liegt, der kleiner als H₀ + 0,8 H₀ ist, wobei H₀ der radiale Abstand ist, der die Basis des Wulstes von der Linie mit der größten axialen Breite des Luftreifens beabstandet.

5. Luftreifen nach einem der vorhergehenden Ansprüche, **dadurch gekennzeichnet, dass** der axial innere Rand (51) der zusätzlichen Lage (5) radial außen und angrenzend an den Rand der Scheitelfunktionslage (32) liegt, die radial am weitesten außen liegt.

6. Luftreifen nach einem der Ansprüche 1 bis 4, der eine Schutzlage für den Scheitel (33) radial außen an den Scheitelfunktionslagen aufweist, **dadurch gekennzeichnet, dass** der axial innere Rand (51) der zusätzlichen Lage (5) radial außen angrenzend an den Rand der Scheitelfunktionslage (33) liegt.

7. Luftreifen nach einem der Ansprüche 1 bis 4, **dadurch gekennzeichnet, dass** der axial innere Rand (51) der zusätzlichen Lage (5) radial innen an dem und angrenzend an den Rand der Scheitelfunktionslage (31) liegt, die radial am weitesten innen ist.

8. Luftreifen nach einem der vorhergehenden Ansprüche, **dadurch gekennzeichnet, dass** er in jedem Wulst mindestens eine Lage (8) aus metallischen Verstärkungselementen aufweist, die in der Lage parallel zueinander verlaufen und in radialer Richtung orientiert sind, und **dadurch**, dass der axial äußere Rand der Lage (8) sich in einem Abstand H₂ von der Wulstbasis von mindestens 0,5 H₀ befindet.
